Europäisches Patentamt

European Patent Office

Office européen des brevets

(11) Veröffentlichungsnummer: **0 051 194**
**B1**

(19)

(12) # EUROPÄISCHE PATENTSCHRIFT

(45) Veröffentlichungstag der Patentschrift:
04.12.85

(51) Int. Cl.⁴: **F 03 D 9/00, B 63 H 13/00**

(21) Anmeldenummer: **81108462.3**

(22) Anmeldetag: **17.10.81**

(54) **Windantrieb für Fahrzeuge und stationäre Maschinen jeder Art.**

(30) Priorität: **18.10.80 DE 3039387**

(43) Veröffentlichungstag der Anmeldung:
**12.05.82 Patentblatt 82/19**

(45) Bekanntmachung des Hinweises auf die Patenterteilung:
**04.12.85 Patentblatt 85/49**

(84) Benannte Vertragsstaaten:
**AT BE CH DE FR GB IT LI NL SE**

(56) Entgegenhaltungen:
**DE - C - 804 090**
**DE - C - 807 366**
**FR - A - 416 935**
**FR - A - 2 345 599**
**FR - A - 2 365 710**
**GB - A - 203 605**
**GB - A - 993 117**
**GB - A - 1 338 463**
**US - A - 1 417 000**
**US - A - 2 677 344**

(73) Patentinhaber: **Jöst, Bernhard, Traminerweg 4,**
**D-6800 Mannheim 31 (DE)**

(72) Erfinder: **Jöst, Bernhard, Traminerweg 4,**
**D-6800 Mannheim 31 (DE)**

(74) Vertreter: **Zipse & Habersack, Lessingstrasse 12,**
**D-7570 Baden-Baden (DE)**

## Beschreibung

Die Erfindung betrifft einen Windantrieb für Wasser- und Landfahrzeuge sowie stationäre Arbeitsmaschinen und Stromerzeuger, bestehend aus einem in Windrichtung hinter der Vertikalachse eines Mastes dreh- und schwenkbar gelagerten Horizontalwindrad mit Windflügeln, deren innere Flügelteile unmittelbar längs der Außenfläche eines Nabenkörpers mit diesem fest verbunden sind, welcher mit Einrichtungen zur Kraftübertragung, insbesondere einer Wasserschraube, in Verbindung steht.

Das technische Gebiet der Erfindung bezieht sich auf Einrichtungen zur Gewinnung und Nutzbarmachung der Windenergie.

Es sind verschiedene Windantriebe bekanntgeworden, die aus Windflügeln oder Flügelrädern bestehen, die vom Wind in Umdrehung versetzt werden und ihre Energie, gegebenenfalls über Zwischenglieder, den Kraftübertragungseinrichtungen zuführen.

Sofern sich der Windantrieb auf Wasserfahrzeuge bezieht, sind ebenfalls mehrere Einrichtungen bekanntgeworden, um mittels eines Flügelrades oder eines Propellers die Windenergie unmittelbar auf eine Wasserschraube zum Antrieb des Wasserfahrzeugs zu leiten.

In der DE-PS 807 366 ist ein derartiger Windantrieb für Wasserfahrzeuge mittels Windmotor gemäß dem Oberbegriff des Anspruchs 1 beschrieben, bei welchem die vom Windmotor gelieferte Energie unmittelbar, ggf. unter Verwendung von Zwischengliedern, zum Antrieb von Wasserschrauben herangezogen wurde. Bei dem vorbekannten Windantrieb wird ein bestimmtes Verhältnis der Wirkflächen von Windmotor und Wasserantriebsmittel gewählt, damit die Schubkraft des Wasserantriebsmittels ausreicht, den Wasser- und Luftwiderstand bei der Fahrt gegen den Wind zu überwinden.

Eine besondere Ausbildung der Luftschraube im Hinblick auf eine Verminderung des eigenen Luftwiderstands und eine optimale Beaufschlagung der Flügelflächen ist jedoch in der genannten Druckschrift nicht angegeben.

Aus der FR-A-2 365 710 ist ein Windrad bekanntgeworden, bei welchem innerhalb der Segmente eines achteckigen Umfanggestells, das mit einem Nabenkörper verbunden ist, eine entsprechende Anzahl von sphärisch konkav gekrümmten, gespannten Flügeln angeordnet ist. Der zylindrische Nabenkörper weist an der vorderen, dem Wind zugewandten Seite eine halbkugelförmige Ausbildung auf und dient im wesentlichen der stromlinienförmigen Verkleidung des Nabenkörpers, der den elektrischen Generator aufnimmt. Die Halbkugel ist nicht unmittelbar mit den Flügeln verbunden, so daß im Hinblick auf die Ausbildung der Flügel eine optimale Ausnutzung der Windenergie nicht gegeben ist.

Die Aufgabe gemäß der vorliegenden Erfindung besteht darin, bei einem Windantrieb der eingangs genannten Art den Luftdurchgangswiderstand weiter zu verringern und den Luftstrom im Zentrum der Windflügel in optimaler Weise auf die Flügelspitzen zu leiten.

Diese Aufgabe wird bei einem Windantrieb der eingangs genannten Art dadurch gelöst, daß die Windflügel sphärisch konkav gegen die Windrichtung gekrümmt sind, und daß die Außenfläche des Nabenkörpers eine Halbkugel darstellt, derart, daß sie den Luftstrom vom Flügelzentrum auf die Flügelspitzen leitet.

Mit dem Windantrieb gemäß der Erfindung werden beispielsweise beim Antrieb eines Wasserfahrzeugs folgende Vorteile erreicht:

Es hat sich gezeigt, daß schon bei Windstärke 2 mit dem Windantrieb gemäß der Erfindung ausgerüstete Wasserfahrzeuge direkt gegen den Wind fahren, während das gleiche Wasserfahrzeug bei einem Antrieb durch einen der bisher bekannten Windmotoren bei Gegenwind zurückgetrieben wird. Der erfindungsgemäße Windantrieb treibt das Wasserfahrzeug parallel zu wachsender Windstärke mit zunehmender Geschwindigkeit nach vorne.

Es wurde ebenfalls festgestellt, daß der Windantrieb gemäß der Erfindung bei gleichem Flügeldurchmesser eine mehrfache Leistung der bisher bekannten Windantriebe liefert.

Der Windantrieb gemäß der Erfindung kann beispielsweise hinter einem Mast des Wasserfahrzeugs so angeordnet sein, daß er sich automatisch in Windrichtung stellt. Dadurch ist eine sehr einfache Gesamteinrichtung möglich, da Steuereinrichtungen, wie Hilfspropeller oder eine Steuerfahne, die die Kreisbewegung abbremsen, entfallen.

Bei Anwendung des Windantriebs in Wasserfahrzeugen kann zur Stabilisierung kleinerer Boote anstelle des üblichen Schwerts unten am Kiel ein oder mehrere Pendelgewichte angeordnet werden.

Gemäß einer besonderen Ausführungsform können die Flügel des Windantriebs durch ein oder mehrere Scharniere oder andere Gelenke unterteilt und damit schwenkbar sein, wobei die Steuerung mechanisch oder elektrisch erfolgen kann.

Es ist mit dem Windantrieb auch möglich, beim Ankern oder Fahren mit überschüssiger Windkraft mit dem Windantrieb einen Stromerzeuger zu koppeln, um damit beispielsweise eine Batterie aufzuladen und die elektrische Stromversorgung des Wasserfahrzeugs zu gewährleisten.

Weitere Ausgestaltungen der Erfindung sind in den abhängigen Ansprüchen angegeben.

Anhand der Zeichnungen soll der Windantrieb gemäß der Erfindung beispielshalber erläutert werden. In den Zeichnungen zeigt

Fig. 1 eine Seitenansicht eines kleineren Boots mit dem Windantrieb gemäß der Erfindung.

Fig. 2 zeigt im Detail eine einfache Einrichtung zur Übertragung der Windenergie auf ein Wasserrad.

Fig. 3 zeigt ein größeres Wasserfahrzeug mit drei gekoppelten Windantrieben gemäß der Erfindung.

Fig. 4 zeigt eine abgewandelte Ausführungsform der Kraftübertragung gemäß Fig. 2.

Fig. 5 zeigt eine Ansicht der Ausführungsform gemäß Fig. 4, von rechts gesehen.

Fig. 6 zeigt eine detaillierte Darstellung eines dreiflügeligen Windrads von vorne, von der Seite und von hinten.

Fig. 7 zeigt eine mechanische Vorrichtung zum Schwenken der Flügel nach hinten und nach vorne.

Fig. 8 zeigt eine Ansicht der Fig. 7 von links.

Fig. 9 zeigt die Ansicht eines Windantriebs mit geteiltem Flügel.

Fig. 10 zeigt die Ansicht eines zurückgeklappten Flügels.

Die Fig. 11 und 12 zeigen eine Seiten- und Frontansicht der Flügel mit Scharnier und Zugfeder.

Fig. 13 zeigt eine Halterung der Flügelstäbe im Detail.

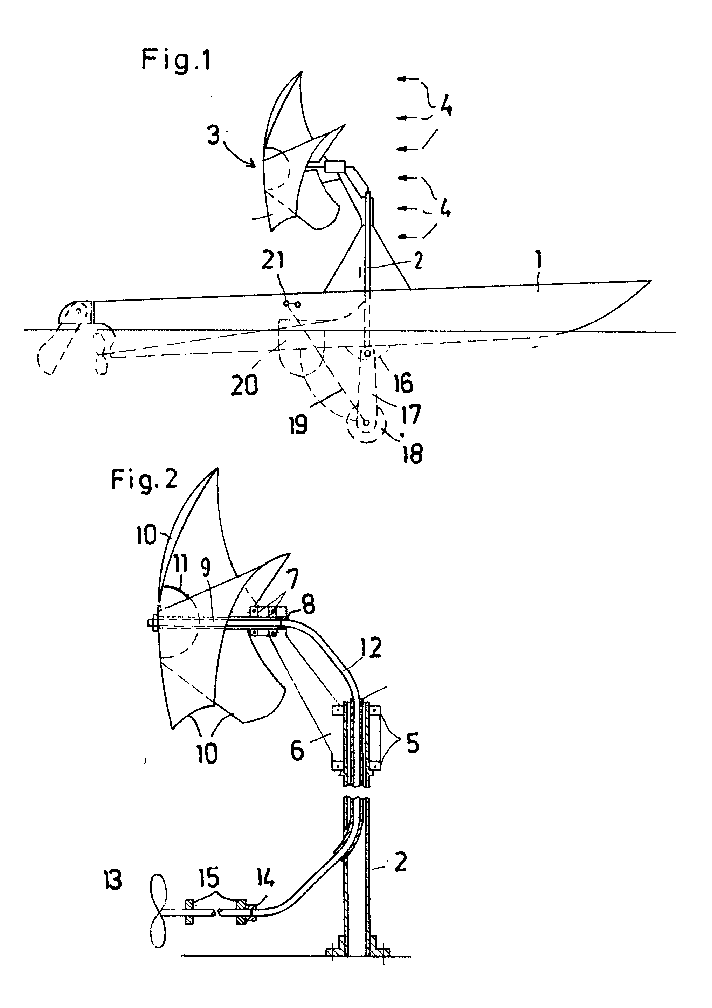

Wie sich aus Fig. 1 ergibt, ist an einem im Bootskörper 1 befestigten Mast 2 ein aus drei Windflügeln bestehendes Windrad 3 angeordnet, wobei die Windrichtung durch die Pfeile 4 gezeigt wird.

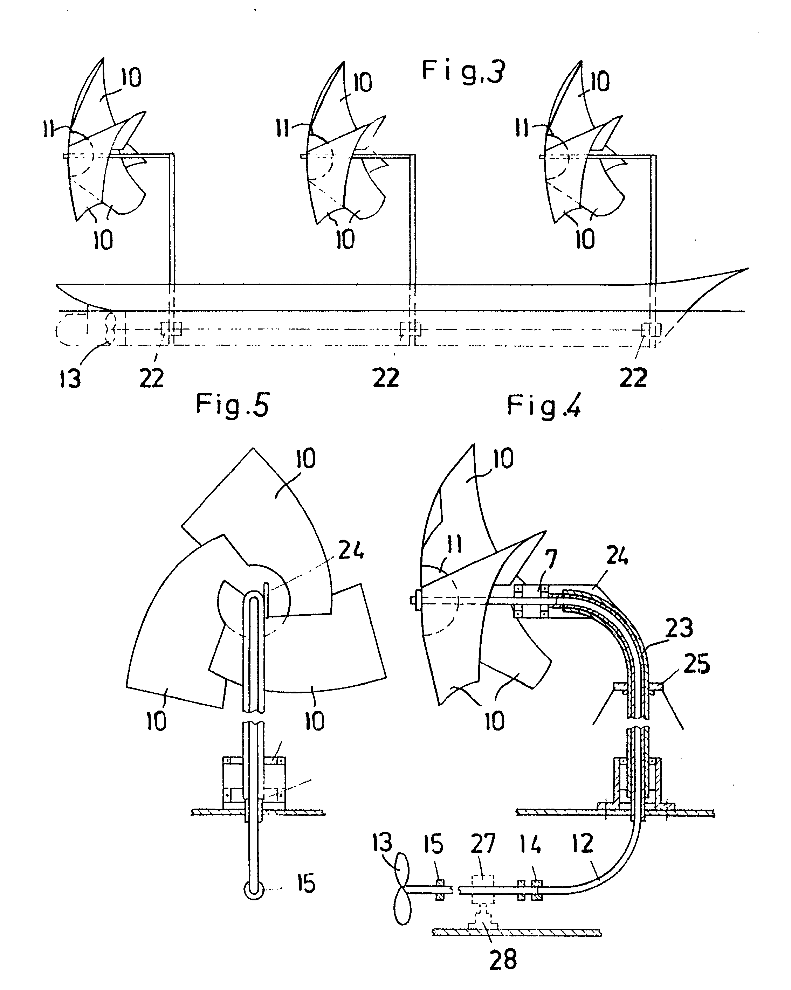

Wie sich aus Fig. 1 in Verbindung mit Fig. 2 ergibt, ist der Mast 2 als Rohrmast ausgebildet, an dem ein Lager 5 und ein Tragarm 6 befestigt sind. Der Tragarm 6 weist am oberen Ende ein daran befestigtes Lager 7 auf, welches die als Rohr 9 ausgebildete starre Flügelachse trägt. Die rohrförmige Flügelachse 9 ist beispielsweise über eine Übergangsmuffe 8 mit der biegsamen Welle 12 verbunden. Am vorderen Ende der Flügelachse sind die Flügel 10 befestigt, die mit dem halbkugelförmigen Nabenkörper 11 derart verbunden sind, daß dieser den Luftstrom vom Flügelzentrum auf die Spitzen der Flügel 10 leitet.

Das durch die Windkraft erzeugte Drehmoment wird somit von den Flügeln 10 über die rohrförmige Flügelachse 9 auf die biegsame Welle 12 übertragen, die durch den Rohrmast 2 geführt wird und am hinteren Ende eine Wasserschraube 13 trägt, wobei die biegsame Welle mit einer Kupplung 14 verbunden ist, die mit der im Lager 15 gelagerten Welle der Wasserschraube 13 koppelbar ist. Die Regulierung der Bootsgeschwindigkeit kann somit über die Kupplung 14 erfolgen.

Zur Stabilisierung des Boots kann anstelle des sonst üblichen Schwerts am unteren Kiel eine Halterung 16 für einen Pendelarm 17 vorgesehen sein, an dem am unteren Ende eine Pendelrolle 18 drehbar gelagert ist. Der Pendelarm 17 kann durch einen Seilzug 19 in den Schwertkasten 20 mittels einer Hand- oder Elektrowinde 21 bis zur Hälfte eingezogen werden.

Wie sich aus Fig. 3 ergibt, sind auf einem größeren Wasserfahrzeug drei Windantriebe gemäß der Erfindung angeordnet, die durch Kegelradpaare 22 mit einer gemeinsamen Antriebswelle für die Wasserschraube 13 verbunden sind.

In den Fig. 4 und 5 ist eine Ausführung des Windantriebs gemäß der Erfindung mit drehbar gelagertem, gebogenem Mastrohr 23 dargestellt, an dem sich eine Halterung 24 für das Flügelachsenlager 7 der Flügel 10 befindet. An dem drehbar gelagerten Haltering 25 sind die Ösen für die Befestigungswanten vorgesehen. Das untere Ende der biegsamen Welle 12 ist in ähnlicher Weise gelagert, wie dies in Fig. 2 dargestellt ist, jedoch befindet sich auf der Wasserschraubenachse eine Kupplung 27, die im Bedarfsfall mit einem Generator 28 zur Erzeugung eines elektrischen Stroms verbindbar ist.

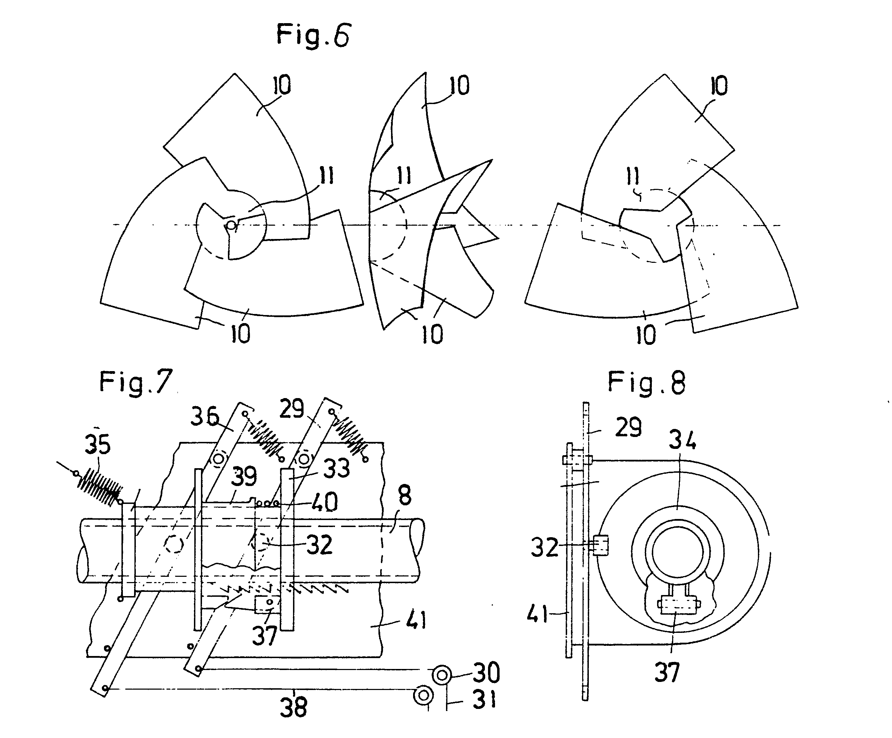

In Fig. 6 sind drei perspektivische Ansichten eines dreiflügeligen Windrads dargestellt. Die in Richtung der Windströmung (Pfeile 4 von Fig. 1) gekrümmten Flügel 10 sind mit der ebenfalls in Richtung des Windstroms konvex gekrümmten Halbkugel 11 verbunden, um den Luftstrom im Flügelzentrum auf die Spitzen der Flügel 10 zu leiten.

Fig. 7 zeigt eine mechanische Vorrichtung zum Schwenken der Flügel nach hinten und nach vorne, wie dies beispielsweise in Fig. 10 dargestellt ist. Der Hebel 29 drückt durch den Seilzug 30, 31 mit der Rolle 32 die Gleithülse mit den Scheiben 33, 34 nach rechts. Dadurch werden die nach hinten geschwenkten Flügel (in Fig. 10 dargestellt) über die Zugdrähte oder Plastikseile mit der Feder 35 nach rechts gezogen. Der Hebel 36 tritt dabei nicht in Funktion, da der Anker 37 nicht sperrt. Dieser Anker rastet erst in der gewünschten Flügelstellung ein, wenn der Seilzug nachläßt. Zur Rückstellung der Flügel nach links drückt der Hebel 36 durch den Seilzug 38 die Scheiben der äußeren Hülle 39 nach rechts, so daß die Nase der Sperrklinke diese von dem Zahnsegment auf der Flügelwelle abhebt. Auch der geringste Luftdruck drückt die Flügel nach links und rastet in der gewünschten Stellung ein, in welcher der Zug am Seil nachläßt. Die Druckfeder 40 drückt die Außenhülse 39 wieder in Ruhestellung. Die hier beschriebene Spannvorrichtung ist normalerweise nur zum Stillegen der Flügel erforderlich, da selbst bei größeren Windstärken die Flügelstellung durch die in den Spannseilen eingebauten Zugfedern 35 automatisch eingestellt wird. Die Zahnsperre 37 ist in den Fig. 7 und 8 im Ausschnitt dargestellt. Das Zahnsegment ist an der Achse direkt oder mittels Keilnut befestigt und sichert gleichzeitig die mit Nuten versehenen Gleithülsen gegen Verdrehung. Die gesamte Anordnung ist an einer Halterung 41 befestigt.

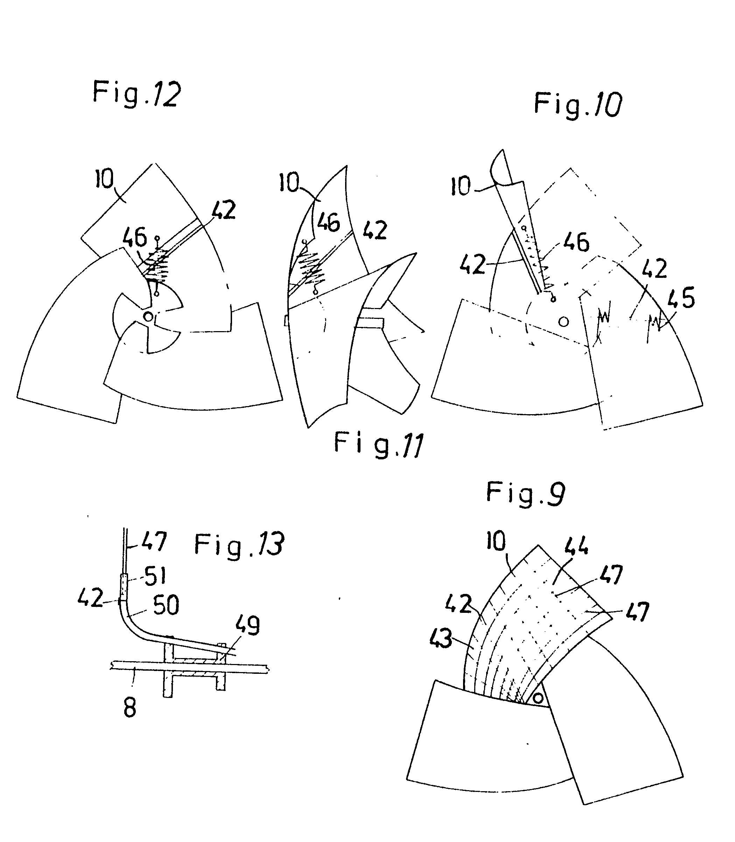

In Fig. 9 ist ein durch ein Scharnier 42 oder ein anderes Gelenk unterteilter Flügel 10 dargestellt. Der Innenteil 43 ist mit der Achse bzw. der Halbkugel fest verbunden, während der Außenteil 44 mittels einer Drehfeder 45 (Fig. 10) oder einer Zugfeder 46 (Fig. 12) verbunden ist und bei starkem Wind elastisch nachgibt. Sollen die Flügel bei beliebig starkem Wind stillgelegt werden, kann mit Vorteil die Vorrichtung gemäß Fig. 7 angewendet werden. Da sich die Flügel durch die schräge Anordnung der Gelenke nicht nur neigen, sondern auch drehen, werden diese bei stärker Vor- oder Rückneigung auf ihrer Rückseite beaufschlagt und bleiben stehen. Noch stärkere Neigung erzielt der Wechsel der Drehrichtung. Damit ist es möglich, ohne Getriebe oder Kupplung alle Fahrzeuge anzuhalten oder vor- oder rückwärtsfahren zu lassen. In die Flügel können elastische Längsstäbe 47 oder Rohre aus Leichtmetall oder Kunststoff mit durch Klappringe oder Karabinerhaken leicht abnehmbarem Tuch- oder Kunststoffbezug eingesetzt werden. Dieser kann auch über Seilrollen hiß- und raffbar gemacht werden. Wenn die Längsstäbe 47 oder Rohre mit Zug nach außen eingesetzt werden, können die in Fig. 9 dargestellten Querverbindungen 48 entfallen. Bei Verwendung hochelastischer Stäbe oder Rohre kann auf Scharniere, Federn und andere Regulatorvorrichtungen verzichtet werden, da diese Flügel bei zu starkem Sturm automatisch nach hinten nachgeben und somit kein Drehmoment mehr gegeben ist. Alle Flügel aus Leichtmetallblech, Kunststoff oder Stäben mit Bespannungen können aus Transport- oder Montagegründen axial oder radial durch Scharniere mit Drehfedern oder Festverbindungen mehrfach unterteilt werden.

In Fig. 10 ist ein zurückgeklappter Flügel 10 mit Zugfeder 46 dargestellt sowie ein Flügel 10 mit Drehfeder 45.

Fig. 11 zeigt den Flügel in Seitenansicht mit Scharnier 42 und Zugfeder 46.

Fig. 12 zeigt eine Ansicht von rechts der Flügelanordnung gemäß Fig. 11.

In Fig. 13 ist im Detail eine Halterung für die Flügelstäbe oder Rohre 47 dargestellt. Auf der Flügelachse 8 ist eine Hülse 49 mit Scheiben zur Aufnahme der Kurvenrohre 50 angeordnet. Am Ende ist das Scharnier 42 vorgesehen, das mit einer Klemmvorrichtung 51 verbunden ist, in die die Flügelstäbe 47 eingesteckt sind.

Der erfindungsgemäße Windantrieb kann selbstverständlich anstelle des in den Beispielen dargestellten Wasserfahrzeugs auch für Landfahrzeuge sowie stationäre Antriebsmaschinen und Stromerzeuger eingesetzt werden.

**Patentansprüche**

1. Windantrieb für Wasser- und Landfahrzeuge sowie stationäre Arbeitsmaschinen und Stromerzeuger, bestehend aus einem in Windrichtung (4) hinter der Vertikalachse eines Mastes (2) dreh- und schwenkbar gelagerten Horizontalwindrad (3) mit Windflügeln (10), deren innere Flügelteile unmittelbar längs der Außenfläche eines Nabenkörpers (11) mit diesem fest verbunden sind, welcher mit Einrichtungen zur Kraftübertragung (12, 13), insbesondere einer Wasserschraube (13), in Verbindung steht, dadurch gekennzeichnet, daß die Windflügel (10) sphärisch konkav gegen die Windrichtung (4) gekrümmt sind, und daß die Außenfläche des Nabenkörpers eine Halbkugel (11) darstellt, derart, daß sie den Luftstrom vom Flügelzentrum auf die Flügelspitzen leitet.

2. Windantrieb nach Anspruch 1, dadurch gekennzeichnet, daß die Windflügel (10) durch ein Gelenk (42) geteilt sind, wobei der Innenteil (43) fest mit der Halbkugel (11) verbunden ist und die Außenteile (44) mittels Federn (45, 46) in Arbeitsstellung gehalten sind.

3. Windantrieb nach Anspruch 2, dadurch gekennzeichnet, daß die Außenteile (44) der Windflügel (10) durch eine mechanische Einrichtung verschwenkbar sind, die an einer Halterung (41) befestigt ist und aus Hebeln (29, 36) und Seilzügen (30, 31) und einer auf der Achse (8) vorgesehenen Gleithülse (39) besteht, wobei die Gleithülse durch eine Druckfeder (40) in die Ruhestellung gedrückt wird und die Flügelstellung durch in den Spannseilen eingebaute Zugfedern (35) durchgeführt wird.

4. Windantrieb nach einem der Ansprüche 1 bis 3, dadurch gekennzeichnet, daß die Windflügel (10) und/oder die Halbkugel (11) aus Leichtmetallblech oder Kunststoff bestehen.

5. Windantrieb nach einem der Ansprüche 1 bis 4, dadurch gekennzeichnet, daß die Flügel aus elastischen Leichtmetall- oder Kunststoffrohren oder Stäben (47) mit einer Tuch- oder Kunststofffolienbespannung bestehen.

6. Windantrieb nach Anspruch 5, dadurch gekennzeichnet, daß die Bespannung durch Klappringe oder Karabinerhaken gleitfähig an den Längsrohren oder Stäben befestigt wird und mittels Rollenseilzug hiß- und raffbar ist.

7. Windantrieb nach einem der Ansprüche 5 bis 6, dadurch gekennzeichnet, daß eine Haltevorrichtung für die Stäbe (47) oder Rohre, bestehend aus einer Hülse (49) mit daran befestigten Kurvenrohren (50), auf die Flügelachse (8) aufgeschoben und befestigt ist, wobei die Stäbe (47) oder Rohre in eine Klemmvorrichtung (51) eingesteckt oder festgeklemmt sind, die durch ein Scharnier (42) mit dem Kurvenrohr (50) verbunden ist.

**Claims**

1. Wind power drive for water and land vehicles and for stationary work machines and generators, consisting of a horizontal wind wheel (3) disposed in the wind direction (4) behind the vertical axis of a mast (2) so as to be able to rotate and swivel, having wind vanes (10) whose inner vane parts are connected to this directly along the external surface of a hub body (11), which is connected to devices for power transmission (12, 13), in particular a water propeller (13), characterised in that the wind vanes (10) are curved spherically concave against the wind direction (4) and that the external surface of the hub body (11) comprises a hemisphere (11) such that it guides the air stream from the centre of the vane to its tip.

2. Wind power drive according to claim 1, characterised in that the wind vanes (10) are divided by a hinge, whereby the inner part (43) is firmly connected to the hemisphere (11) and the outer parts (44) are retained in the working position by means of springs (45, 46).

3. Wind power drive according to claim 2, characterised in that the outer parts (44) of the wind vanes (10) can be swivelled by a mechanical device which is secured to a support (41) and consists of levers (29, 36) and cable lines (30, 31) and of a sliding casing (39) provided on the axis (8), the sliding casing being urged into the position of rest by a compression spring (40) and the vane positioning being achieved by tension springs (35) in the tension cables.

4. Wind power drive according to one of claims 1 to 3, characterised in that the wind vanes (10) and/or the hemisphere (11) are made of light metal sheet or plastic.

5. Wind power drive according to one of claims 1 to 4, characterised in that the vanes consist of elastic light metal or plastic tubes or rods (47) with a cloth or plastics film covering.

6. Wind power drive according to claim 5, characterised in that the covering is slidably secured on the longitudinal tubes or rods by snap rings or snap hooks and can be hoisted and gathered by means of a rolling cable line.

7. Wind power drive according to one of claims 5 to 6, characterised in that a retaining device for the rods (47) or tubes, consisting of a casing (49) with curved tubes (50) secured to it, is pushed on to the vane axis (8) and secured thereon, the rods (47) or tubes being inserted into or securely clamped to a clamping device (51), which is connected to the curved tube (50) via a hinge (42).

**Revendications**

1. Entraînement par vent pour véhicules aquatiques et terrestres ainsi que pour machines de travail fixes et générateurs de courant, formé d'une éolienne horizontale (3) montée de manière à pouvoir tourner et pivoter derrière l'axe vertical d'un mât (2) dans le sens (4) du vent, muni de pales (10) dont les parties intérieures de pale sont reliées solidairement à un corps de moyen (11), directement le long de la surface extérieure de celui-ci qui est en liaison avec des dispositifs de transmission de force (12, 13), en particulier une hélice à eau (13), caractérisé en ce que les pales (10) sont courbées sphériquement de façon concave contre le sens (4) du vent, et en ce que la surface extérieure du corps de moyeu constitue une demi-sphère (11) de telle sorte qu'elle conduit le courant d'air du centre des pales sur les pointes de pales.

2. Entraînement par vent selon la revendication 1, caractérisé en ce que les pales (10) sont divisées par une articulation (42), la partie intérieure (43) étant reliée solidairement à la demi-sphère (11) et les parties extérieures (44) étant retenues en position de travail au moyen de ressorts (45, 46).

3. Entraînement par vent selon la revendication 2, caractérisé en ce que les parties extérieures (44) des pales (10) peuvent pivoter sous l'action d'un dispositif mécanique qui est fixé à une monture (41) et est formé de leviers (29, 36) et de câbles de traction (30, 31) et d'une douille de glissement (39) prévue sur l'axe (8), la douille de glissement étant poussée à la position de repos par un ressort de compression (40) et le réglage des pales étant effectué par des ressorts de traction (35) incorporés aux câbles tendeurs.

4. Entraînement par vent selon l'une des revendications 1 à 3, caractérisé en ce que les pales (10) et/ou la demi-sphère (11) sont formées de tôle de métal léger ou de matière synthétique.

5. Entraînement par vent selon l'une des revendications 1 à 4, caractérisé en ce que les pales sont formées de tubes ou barres élastiques en métal léger ou en matière synthétique avec un revêtement de toile ou de feuille de matière synthétique.

6. Entraînement par vent selon la revendication 5, caractérisé en ce que le revêtement se fixe aux tubes longitudinaux ou barres, de manière à pouvoir glisser, au moyen d'anneaux pliants ou de mousquetons et peut être hissé ou amené au moyen d'une traction à câble à rouleaux.

7. Entraînement par vent selon l'une des revendications 5 et 6, caractérisé en ce qu'un dispositif de retenue des barres (47) ou tubes, formé d'une douille (49) à laquelle sont fixés des tubes de came (50), est glissé et fixé sur l'axe (8) des pales, les barres (47) ou tubes étant insérés ou bloqués dans un dispositif de serrage (51) qui est relié par une charnière (42) au tube de came (50).

Fig.1

Fig.2

Fig.3

Fig.5    Fig.4

Fig.6

Fig.7

Fig.8

Fig.12

Fig.10

Fig.11

Fig.13

47
51
42
50
49

8

Fig.9

10
44
47
42
47
43